# EUROPÄISCHE PATENTSCHRIFT

(11) **EP 2 101 619 B1**
(45) Veröffentlichungstag und Bekanntmachung des Hinweises auf die Patenterteilung: **09.06.2010**
(21) Anmeldenummer: 07845636.5
(22) Anmeldetag: 17.12.2007
(51) Int. Cl.: A47J 31/44

(54) **VERFAHREN ZUR ABGABE VON MILCHPORTIONEN IN GETRÄNKEBEREITUNGSMASCHINEN**
METHOD FOR DISPENSING MILK PORTIONS IN DRINK PREPARATION MACHINES
PROCÉDÉ DE DISTRIBUTION DE PORTIONS DE LAIT DANS DES MACHINES DE PRÉPARATION DE BOISSONS

(30) Priorität: 27.12.2006 CH 21122006
(43) Veröffentlichungstag der Anmeldung: 23.09.2009
(73) Patentinhaber: Jura Elektroapparate AG, 4626 Niederbuchsiten (CH)
(72) Erfinder: REYHANLOO, Shahryar, 4573 Lohn Ammansegg (CH)
(74) Vertreter: EGLI-EUROPEAN PATENT ATTORNEYS
(86) Internationale Anmeldenummer: PCT/CH2007/000639
(87) Internationale Veröffentlichungsnummer: WO 2008/077264

(56) Entgegenhaltungen:
- EP-A- 1 472 963
- WO-A-97/47376

## Beschreibung

Die Erfindung betrifft ein Verfahren zur Abgabe von Milchportionen in Getränkebereitungsmaschinen mit einer Milchfüllstandsüberwachungseinrichtung für einen Milchbehälter nach Patentanspruch 1, insbesondere für Kaffeemaschinen mit beigestelltem Milchbehälter für die Bereitung von Cappuccino. Ferner betrifft die Erfindung eine Milchfüllstandsüberwachungseinrichtung für einen Milchbehälter nach Patentanspruch 2 zur Durchführung des Verfahrens.

Bei Kaffeemaschinen wird vielfach der Milchschaum für den Cappuccino und die Erwärmung von Milch mit Hilfe des Venturi-Prinzips in einer Aufschäumvorrichtung realisiert. Mit einem geeigneten Dampfstrahl wird ein Unterdruck erzeugt, der die Milch aus einem Vorratsbehälter (Milchbehälter) via ein Schlauchsystem ansaugt und in die Düse der Aufschäumvorrichtung leitet. In der Düse wird die Milch mit dem Dampf zusammengebracht und mit einem beruhigten Austrittsstrahl verlässt das Milch-Dampf-Luft-Gemisch die Aufschäumvorrichtung und läuft in die Tasse. Wird der kalten Milch beim Ansaugen Luft beigemischt, wird in der Tasse warme Milch mit einem darüber liegenden Milchschaum hergestellt. Ohne Luftzudosierung kann die Milch nur erwärmt werden.

Falls zu wenig oder keine Milch im Milchbehälter ist und der Ablauf der Milchproduktbezüge, insbesondere der Cappuccinobezug in der Kaffeemaschinensteuerung, fix programmiert ist, bekommt der Konsument nur einen Kaffee ohne oder mit zu wenig Milch und Milchschaum. Für den Benutzer ist dies ärgerlich, muss er doch den ganzen Vorgang nochmals wiederholen um einen perfekten Cappuccino (Milchprodukt) zu erhalten und den eventuell bereits bezogenen Kaffee wegschütten. Dies bedeutet eine Verschwendung von Ressourcen und hat auch finanzielle Auswirkungen, insbesondere wenn der Konsument für den Cappuccinobezug einen fixen Betrag zahlen muss, sei dies in einem Bürobetrieb oder im Gastrobereich.

Ist die Milchzuführung unterbrochen, sei dies weil keine oder zu wenig Milch vorhanden ist, bildet sich beim Bezug kein homogener Milchaustrittsstrahl aus der Düse. Zum ersten Ärgernis kommt dadurch noch dazu dass die Frontseite der Kaffeemaschine durch Milch-, Wasser- und Dampfspritzer verschmutzt werden kann.

Da die Milchbehälter zudem meistens nicht durchsichtig sind, kann der Konsument den Füllstand der Milch schlecht kontrollieren. Die beigestellte Milch sollte möglichst gekühlt aufbewahrt werden. Dies wird vielfach mit einem Isolierbehälter (doppelwandige Konstruktion mit vakuumisiertem Zwischenraum) oder mit einem kleinen Kühlschrank mit Verwendung eines Peltier-Elements erreicht. Bei diesen Vorrichtungen ist es nicht möglich, den Milchfüllstand ohne ein Öffnen der Behältnisse zu kontrollieren. Zudem ist dies meist auch unpraktisch und wird oft vergessen.

Es gibt zwar Getränkebereitungsmaschinen wie beispielsweise die "Thermoplan Tiger" der Firma Thermoplan, die über ein integriertes Milchsystem mit einem gekühlten Milchtank im Unterbau verfügen. Das Gerät verfügt zudem über eine kapazitiv arbeitende Milchfüllstandsüberwachungseinrichtung. Naturgemäss ist aber auch hier der Milchfüllstand im Milchtank für den Benützer der Getränkebereitungsmaschine nicht ohne weiteres ersichtlich. Es hat sich zudem gezeigt, dass bei diesem Gerät im Falle des Ansprechens der Milchfüllstandsüberwachungseinrichtung, d.h. beim Ansprechen des kapazitiv arbeitenden Sensors, ein gegebenenfalls gerade in Ausführung begriffener Milchausgabevorgang nicht vollständig durchgeführt, sondern vorzeitig abgebrochen wird.

Aus WO 97/47376 ist eine Aufschäumvorrichtung für Milch bekannt, bei welcher Milch aus einem Milchbehälter über ein Ansaugrohr mittels einer Pumpe unter Kontrolle einer Mikroprozessor-Steuerung angesaugt und einer Mischvörrichtung, in welcher die angesaugte Milch mit Wasserdampf und Luft mischbar und auf diese Weise aufschäumbar ist, zugeführt werden kann. Diese Aufschäumvorrichtung umfasst einen Sensor zur Bestimmung des Füllstands der Milch im Milchbehälter, welcher Sensor relativ zum Boden des Milchbehälters auf derselben Höhe angeordnet ist wie eine Ansaugöffnung zum Ansaugen der Milch, welche Ansaugöffnung am unteren Ende des Ansaugrohres angeordnet ist, wobei Signale des Sensors von der Mikroprozessor-Steuerung empfangen werden können.

Es ist somit Aufgabe der Erfindung, bei Getränkebereitungsmaschinen wie Kaffeemaschinen ein verbessertes und benutzerfreundlicheres Verfahren zur Bereitung von Getränken mit Milch oder Milchbestandteilen vorzuschlagen. Weiterhin soll eine geeignete Milchfüllstandsüberwachungseinrichtung zur Durchführung des Verfahrens vorgeschlagen werden.

Diese Aufgabe wird durch die Merkmale der unabängigen Patentansprüche 1-3 gelöst.

Die Lösung geht davon aus, dass ein von der Gerätesteuerungselektronik kontrollierter Bezug einer Milchportion aus dem Milchbehälter selbst dann vollständig und mit genügender Milchmenge zu Ende geführt wird, wenn die Milchfüllstandsüberwachungseinrichtung während des Bezugs der Milchportion ein Absinken der Standhöhe der Milch unter einen Schwellenwert signalisiert.

Gleichzeitig wird dem Benutzer zur weiteren Erhöhung der Bedienungsfreundlichkeit der Getränkebereitungsmaschine beim Absinken der Standhöhe der Milch unter den Schwellenwert an einer Anzeige eine Indikation gegeben, dass der Milchbehälter leer ist, und es werden auch weitere Bezüge von Milchportionen gesperrt, bis der Milchbehälter wieder genügend gefüllt ist oder zumindest bis die Milchfüllstandsüberwachungseinrichtung diese Funktion wieder freigibt.

Indem man sicherstellt, dass ein angefangener Milchbezugsvorgang auch stets vollständig zu Ende geführt wird, erreicht man, dass der Milchauslaufstrahl immer homogen bleibt und dadurch Strahlunregelmässigkeiten und Spritzer zuverlässig vermieden werden.

Selbstverständlich müssen hardwareseitig dazu die notwendigen Voraussetzungen ebenfalls vorhanden sein. So muss mit konstruktiven Massnahmen sichergestellt werden, dass im Fall des Ansprechens des Schwellenwertsensors im Milchbehälter noch genügend Milch vorhanden ist, um den angefangenen Vorgang auch tatsächlich zu Ende führen zu können. Da derartige Massnahmen jedoch im Wesentlichen meist Dimensionierungsfragen sind, z.B. bei der Festlegung der Höhe der Ansaugöffnung eines Ansaugrohrs und der Höhe der Auslösung eines Schwellenwertsignales, wird im gezeigten Ausführungsbeispiel lediglich auf eine mögliche Ausführungsform Bezug genommen.

Bei den Schwellenwertsensoren kann auf verschiedene Wirkungsprinzipien zurückgegriffen werden. So können beispielsweise kapazitiv oder resistiv wirkende Sensorprinzipien eingesetzt werden. Kapazitive Überwachungen haben den Vorteil, dass sie elektronisch einfacher zu realisieren sind. Derartige Schaltungen sind dem Fachmann jedoch grundsätzlich bekannt, weshalb sie im Folgenden auch nicht im Detail erläutert sind.

Durch die Möglichkeit, dass entweder ein intern oder ein extern angeordneter Milchbehälter verwendet werden kann, lässt sich die Benutzerfreundlichkeit noch weiter verbessern, insbesondere dann, wenn ein modulares Erweiterungskonzept vorgesehen ist (d.h. ein geeigneter Milchbehälter kann der Getränkebereitungsmaschine beigestellt werden).

Im Falle eines extern angeordneten Milchbehälters kann auch eine am Milchbehälter angebrachte externe Auswerteelektronik vorhanden sein. Diese dient dann jedoch in der Regel lediglich der Füllstandinformation und hat, mit Ausnahme von-Signalweitergabefunktionen an die Gerätesteuerungselektronik der Getränkebereitungsmaschine, keine weiteren Funktionen. Es kann aber dennoch sehr praktisch und klarheitsfördernd sein, den Füllstand direkt am 'betroffenen' Gerät anzuzeigen.

Im Folgenden wird die erfindungsgemässe Füllstandsüberwachung bei einer Kaffeemaschine mit zwei Beispielen unter Verwendung des resistiv wirkenden Sensorprinzips anhand von Zeichnungen näher erläutert.

In den Zeichnungen zeigen:
- Fig. 1: eine Prinzipdarstellung einer Kaffeemaschine mit beigestelltem Milchbehälter,
- Fig. 2: eine Schnittzeichnung des Milchbehälters mit einer externen Auswerteelektronik in einer ersten Aus- führungsvariante, und
- Fig. 3: eine vereinfachte Schnittzeichnung der Anordnung der Elemente der Milchfüllstandsüberwachungsein- richtung im Milchbehälter gemäss der ersten Aus- führungsvariante.
- Fig. 4: eine Schnittzeichnung des Milchbehälters mit einer externen Auswerteelektronik in einer zweiten Aus- führungsvariante.

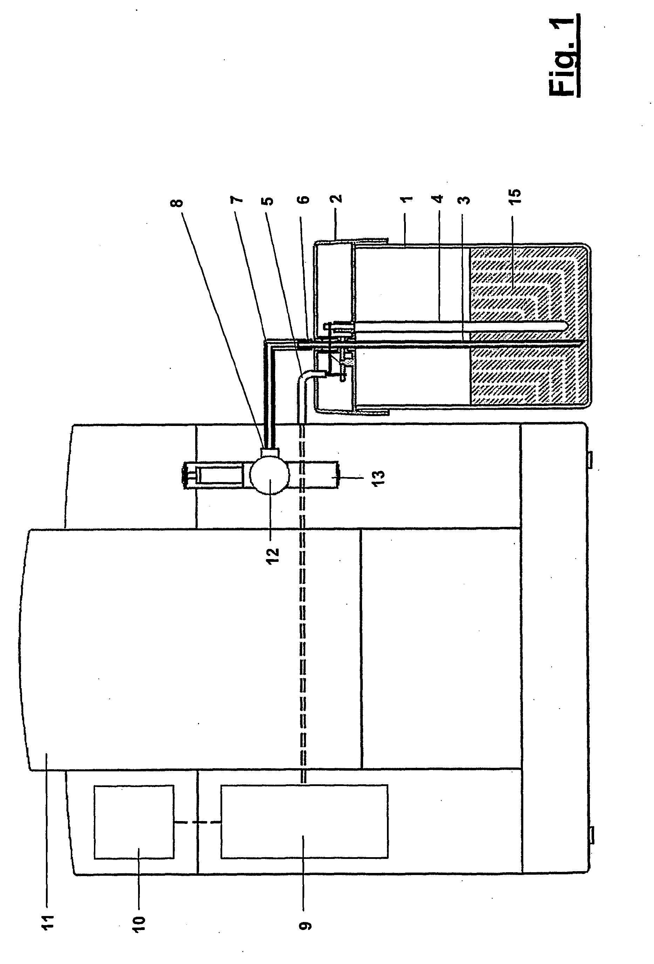

Die Figur 1 zeigt eine Prinzipdarstellung einer Kaffeemaschine mit einem beigestellten Milchbehälter 1.

Dabei wird Milch in den Milchbehälter 1 eingefüllt, der in einer Kaffeemaschine 11 oder vorzugsweise ausserhalb derselben angeordnet ist. Dieser Flüssigkeitsbehälter 1 ist vorzugsweise ein Isolierbehälter und kann aus Metall, Glas oder Kunststoff gefertigt sein. Dadurch kann die Milch längere Zeit in diesem Behälter aufbewahrt werden. Die Milch wird von einem Ansaugrohr 3 mit einem flexiblen Schlauch 7 zu einem Milchschäumer 12 mit einem Milchauslauf 13 gesogen. Der Schlauch 7 ist auf der einen Seite an einem Schlauchanschluss 6 eines Behälterdeckels 2 des Milchbehälters 1 aufgesteckt und auf der anderen Seite an einer Andockstelle 8 des Milchschäumers 12. Beide Verbindungen können vom Anwender zur Reinigung gelöst werden.

Am Behälterdeckel 2 sind das Ansaugrohr 3 und ein Messstab 4 in einem geeigneten Abstand zueinander befestigt. Das Ansaugrohr 3 wird zum Ansaugen der Milch benötigt und ist aus einem elektrisch leitfähigen Material, vorzugsweise Metall, hergestellt. Der kürzere, ebenfalls elektrisch leitende Messstab 4, der auch als unten verschlossenes Rohr ausgeführt sein kann, ist parallel zum Ansaugrohr 3 am Behälterdeckel 2 fixiert. Im Messstab 4 kann auch eine Temperaturmessung integriert sein, mit der die Milchtemperatur gemessen bzw. kontrolliert werden kann. Falls die Temperatur zu hoch wird, kann dies dem Konsumenten direkt über eine Anzeige 10 an der Kaffeemaschine 11 gemeldet werden. Die beiden Elemente Ansaugrohr 3 und Messstab 4 sind elektrisch mit einer Signalleitung 5 mit einer Gerätesteuerungselektronik 9 der Kaffeemaschine 11 verbunden. Mittels Leitwertänderung zwischen dem Ansaugrohr 3 und dem Messstab 4 kann der Füllstand der Milch überwacht werden. Die Leitfähigkeit der Milch ist grösser als diejenige der Luft. Das Prinzip kann auch auf andere Flüssigkeiten übertragen werden, wie Wasser, Tee, etc. Sinkt das Milchniveau unter den (kürzeren) Messstab 4, so gibt es einen markanten Messsignalsprung. Dieses Signal wird direkt in der Gerätesteuerungselektronik 9 oder mit einer externen Anzeige 16 ausgewertet. Bei der direkten Signalauswertung mit der Gerätesteuerungselektronik 9 kann der Bezug von Milchprodukten unterbrochen oder gesperrt werden bis wieder genügend Milch nachgefüllt ist. Dadurch ist sichergestellt, dass der Auslaufstrahl aus dem Milchauslauf 13 des Milchaufschäumers 12 immer homogen bleibt.

Mit der Gerätesteuerungselektronik 9 kann noch eine gewisse Nachlaufmenge 14 freigegeben werden damit der getätigte Bezug nicht abgebrochen wird, falls die eingestellte Milchbezugsmenge eine Restmenge 15 im Milchbehälter 1 nicht übersteigt. Die Aufforderung zur Milchnachfüllung erfolgt erst bei Milchbezugsende. Dem Konsumenten kann das Füllstandsminimum (Alarm) mit verschiedenen Anzeige-möglichkeiten angezeigt werden; es kann optisch mit einer Displayanzeige, einem aufleuchtenden LED oder Piktogramm oder dergleichen geschehen oder es kann akustisch mit einem Piepser, Summer, Vibrator oder dergleichen erfolgen.

Das angewendete Messprinzip funktioniert auch wenn das Ansaugrohr 3 und der Messstab 4 koaxial angeordnet sind.

Falls der Milchbehälter 1 aus Metall ist, kann die Füllstandsüberwachung auch zwischen der Behälterwand und dem Messstab 4 gemacht werden, das Ansaugrohr 3 könnte dann aus einem nicht leitenden Material hergestellt werden. Die entsprechende Signalleitung 5 müsste dann natürlich nicht am Ansaugrohr 3, sondern an der Behälterwand des Milchbehälters 1 befestigt werden.

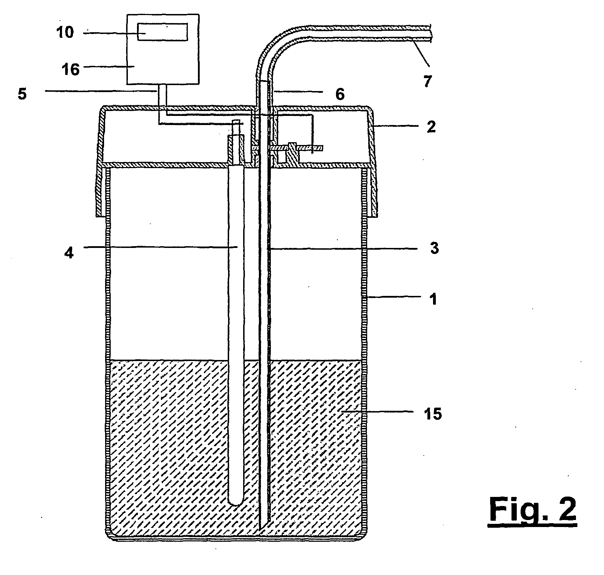

Die Figur 2 zeigt eine Schnittzeichnung des Milchbehälters 1 mit einer externen Auswerteelektronik 16 in einer ersten Ausführungsvariante. Das Messsignal vom Schwellenwertsensor wird hier nicht direkt mit der Gerätesteuerungselektronik 9 der Getränkebereitungsmaschine verbunden, sondern der externen Auswerteelektronik 16 zugeführt. Bei der Signalauswertung mit einer externen Auswerteelektronik 16 wird der Produktbezug bei unterschrittenem Füllstand oder leerem Flüssigkeitsbehälter 1 nicht unterbunden, sondern nur angezeigt. Wird die Anzeige 10 an der externen Auswerteelektronik 16 vom Konsumenten nicht beachtet und trotzdem ein Cappuccinobezug ausgelöst, so ist der Strahl vom Milchauslauf 13 bei unterschrittenem Füllstand nicht homogen. Dem Konsumenten kann das Füllstandsminimum mit ähnlichen Mitteln wie an der Getränkebereitungsmaschine angezeigt werden.

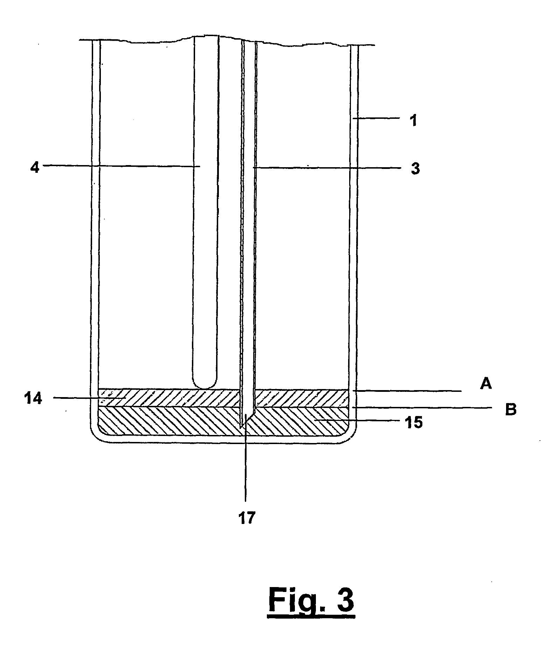

Die Figur 3 zeigt noch eine vereinfachte Schnittzeichnung der Anordnung der Elemente der Milchfüllstandsüberwachungseinrichtung im Milchbehälter gemäss der ersten Ausführungsvariante. Das Ansaugrohr 3 ragt tiefer in den Milchbehälter 1 als der kürzere Messstab 4. Sinkt der Füllstand unter das Niveau A, so berührt das untere Ende des Messstabes 4 die Milch nicht mehr und der gemessene Leitwert zwischen dem Ansaugrohr 3 und dem Messstab 4 ist dann viel kleiner. Das Niveau A bezeichnet deshalb in diesem Ausführungsbeispiel den erwähnten Schwellenwert. Dennoch kann über das Ansaugrohr 3 weiter Milch abgesogen werden, bis auch die Ansaugöffnung 17 des Ansaugrohres freiliegt (angedeutet als Niveau B) und nur noch eine Restmenge 15 im Milchbehälter liegt. Die Zwischen Niveau A und B absaugbare Milchmenge wird auch als Nachlaufmenge 14 bezeichnet und ist so bemessen, dass in Anwendung des erfindungsgemässen Verfahrens zur Abgabe von Milchportionen der Bezug von Milchportionen stets vollständig zu Ende geführt werden kann. Die Nachlaufmenge 14 ist somit gleich gross oder grösser als die grösste pro Getränkeauswahl notwendige Milchmenge.

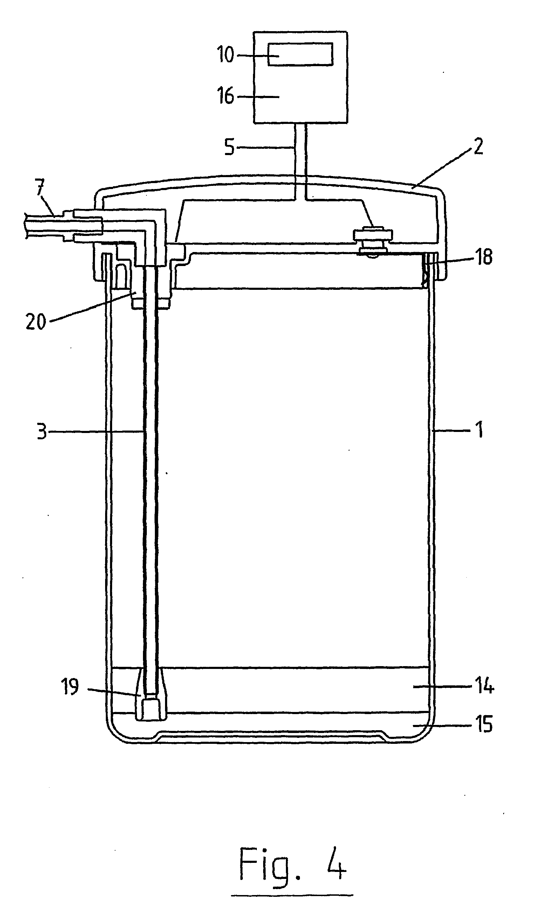

Die Figur 4 zeigt schliesslich noch eine Schnittzeichnung des Milchbehälters mit einer externen Auswerteelektronik in einer zweiten Ausführungsvariante. Der Milchbehälter 1 ist hier aus Metall (oder einem elektrisch .leitfähigem Material). Deshalb kann die Füllstandsüberwachung auch direkt zwischen dem Milchbehälter 1 und dem Ansaugrohr 3 gemacht werden. Dies stellt eine kostengünstigere Lösung dar. Das Ansaugrohr 3 muss in diesem Fall aus zwei Materialien aufgebaut sein. Das obere Teil des Ansaugrohrs 3 ist hier aus einem elektrisch leitfähigen Material (vorzugsweise Metallrohr), das untere Teil, hier ein Ansaugteil 19, aus einem nicht leitenden Material (vorzugsweise Kunststoff oder Gummi). Die beiden Teile müssen dicht miteinander verbunden sein. Mittels einer Kontaktfeder 18 und einem leitenden Verbindungsstück sind die Signalleitungen 5 angeschlossen.

Das Auswertesignal wird erzeugt durch Messen der Leitfähigkeit zwischen dem Ansaugrohr 3 und dem Milchbehälter 1. Zu diesem Zwecke wird das obere Ende des Ansaugrohrs 3 und der Milchbehälter 1 elektrisch mit der externen Auswertelektronik 16 verbunden. Sinkt das Milchniveau unter den elektrisch leitenden Teil vom Ansaugrohr, so erfolgt ein markanter Messsignalsprung. Durch das Ansaugteil 19 kann aber weiter Milch aus dem Milchbehälter 1 gesogen werden. Die Länge des nichtleitenden Ansaugteils 19 bestimmt die Restmenge 15 und die Nachlaufmenge 14 im Milchbehälter 1.

### Bezugsziffernliste

- 1): Milchbehälter
- 2): Behälterdeckel
- 3): Ansaugrohr
- 4): Messstab
- 5): Signalleitung
- 6): Schlauchanschluss
- 7): Schlauch
- 8): Andockstelle Milchaufschäumer
- 9): Gerätesteuerungselektronik
- 10): Anzeige
- 11): Kaffeemaschine
- 12): Milchaufschäumer
- 13): Milchauslauf
- 14): Nachlaufmenge
- 15): Restmenge
- 16): Externe Auswerteelektronik
- 17): Ansaugöffnung
- 18): Kontaktfeder
- 19): Ansaugteil
- 20): Leitendes Verbindungsstück

- A, B: (Füllstands)Niveaus

## Patentansprüche

1. Verfahren zur Abgabe von Milchportionen in Getränkebereitungsmaschinen (11) mit einer Milchfüllstandsüberwachungseinrichtung für einen Milchbehälter (1), wobei verfahrensgemäss
- ein von einer Gerätesteuerungselektronik (9) kontrollierter Bezug einer Milchportion aus dem Milchbehälter (1) selbst dann vollständig und mit genügender Milchmenge zu Ende geführt wird, wenn die Milchfüllstandsüberwachungseinrichtung während des Bezugs der Milchportion ein Absinken der Standhöhe der Milch unter einen Schwellenwert signalisiert,
- dem Benutzer der Getränkebereitungsmaschine beim Absinken der Standhöhe der Milch unter den Schwellenwert an einer Anzeige (10) eine Indikation gegeben wird, dass der Milchbehälter (1) leer ist, und
- weitere Bezüge von Milchportionen an der Getränkebereitungsmaschine gesperrt sind, bis der Milchbehälter (1) wieder genügend gefüllt ist oder zumindest bis die Milchfüllstandsüberwachungseinrichtung diese Funktion wieder freigibt.

2. Getränkebereitungsmaschine (11) mit einem Milchbehälter (1) und mit einer Milchfüllstandüberwachungseinrichtung zur Durchführung des Verfahrens nach Patentanspruch 1, wobei die Getränkebereitungsmaschine (11) eine Gerätesteuerungselektronik (9), eine Anzeige (10) und einen Milchaufschäumer (12) aufweist, und wobei ein Ansaugrohr (3) des Milchbehälters (1) über ein Rohr oder Schlauch (7) mit dem Milchaufschäumer (12) verbunden ist, und wobei das in den Milchbehälter (1) eintauchende Ansaugrohr (3) eine Ansaugöffnung (17) aufweist und ein ebenfalls in den Milchbehälter (1) eintauchender Messstab (4) zur Bildung des Schwellenwertes sowie ein kapazitiv oder resistiv arbeitender Schwellenwertsensor vorhanden ist, **dadurch gekennzeichnet, dass** die Ansaugöffnung (17) am unteren Ende des Ansaugrohres (3) näher am Boden des Milchbehälters (1) angeordnet ist als ein unteres Ende des Messstabes (4) und ein vertikaler Abstand zwischen der Ansaugöffnung (17) am Ansaugrohr (3) und dem unteren Ende des Messstabes (4) so eingestellt ist, dass beim Absinken der Standhöhe der Milch unter den Schwellenwert noch ein minimales vorbestimmtes Milch- Restvolumen absaugbar ist.

3. Getränkebereitungsmaschine (11) mit einem Milchbehälter (1) und mit einer Milchfüllstandüberwachungseinrichtung zur Durchführung des Verfahrens nach Patentanspruch 1, wobei die Getränkebereitungsmaschine (11) eine Gerätesteuerungselektronik (9), eine Anzeige (10) und einen Milchaufschäumer (12) aufweist, und wobei ein Ansaugrohr (3) des Milchbehälters (1) über ein Rohr oder Schlauch (7) mit dem Milchaufschäumer (12) verbunden ist, und wobei das in den Milchbehälter (1) eintauchende Ansaugrohr (3) eine Ansaugöffnung aufweist und gleichzeitig auch als in den Milchbehälter (1) eintauchender Messstab zur Bildung des Schwellenwertes dient, und weiterhin auch ein kapazitiv oder resistiv arbeitender Schwellenwertsensor vorhanden ist, **dadurch gekennzeichnet, dass** das Ansaugrohr (3) und der Milchbehälter (1) elektrisch leitend sind und am unteren Ende des Ansaugrohrs (3) ein elektrisch nicht leitendes Ansaugteil (19) aufgesetzt ist, und die Höhe des nicht leitenden Ansaugteils (19) so bemessen ist, dass beim Absinken der Standhöhe der Milch unter den Schwellenwert noch ein minimales vorbestimmtes Milch- Restvolumen absaugbar ist.

4. Getränkebereitungsmaschine (11) nach Patentanspruch 2 oder 3, **dadurch gekennzeichnet, dass** bei einem bezüglich der Getränkebereitungsmaschine (11) extern angeordneten Milchbehälter (1) eine am Milchbehälter (1) angebrachte externe Auswerteelektronik (16) vorhanden ist.

## Claims

1. A method for dispensing milk portions in beverage preparation machines (11) comprising a milk fill level monitoring device for a milk container (1), wherein according to the method
- a delivery of a milk portion, which is controlled by a device control electronic system (9), is carried out completely and with a sufficient quantity of milk even when the milk fill level monitoring device signalizes a drop of the milk level below a threshold value during the delivery of the milk portion,
- an indication that the milk container (1) is empty is given to the user of the beverage preparation machine on a display (10) in response to the drop of the milk level below the threshold value and
- further deliveries of milk portions at the beverage preparation machine are suspended until the milk container (1) is filled again sufficiently or at least until the milk fill level monitoring device releases this function again.

2. A beverage preparation machine (11) comprising a milk container (1) and comprising a milk fill level monitoring device for carrying out the method according to patent claim 1, wherein the beverage preparation machine (11) encompasses a device control electronic system (9), a display (10) and a milk frother (12) and wherein an intake tube (3) of the milk container (1) is connected to the milk frother (12) via a tube or a hose (7) and wherein the suction tube (3), which dips into the milk container (1), encompasses a suction opening (17) and a measuring stick (4), which also dips into the milk container (1) is available for forming the threshold value as well as a capacitively or resistively operating threshold value sensor, **characterized in that** the suction opening (17) is arranged at the lower end of the suction tube (3) closer to the bottom of the milk container (1) than a lower end of the measuring stick (4) and **in that** a vertical distance between the suction opening (17) at the suction tube (3) and the lower end of the measuring stick (4) is adjusted in such a manner that a minimally predetermined residual milk volume can still be sucked off when the milk level drops below the threshold value.

3. The beverage preparation machine (11) comprising a milk container (1) and comprising a milk fill level monitoring device for carrying out the method according to patent claim 1, wherein the beverage preparation machine (11) encompasses a device control electronic system (9), a display (10) and a milk frother (12) and wherein a suction tube (3) of the milk container (1) is connected to the milk frother (12) via a tube or hose (7) and wherein the suction tube (3), which dips into the milk container (1), encompasses a suction opening and simultaneously also serves as measuring stick, which dips into the milk container (1), for forming the threshold value and furthermore a capacitively or resistively operating threshold sensor is also available, **characterized in that** the suction tube (3) and the milk container (1) are electrically conducting and **in that** an electrically non-conducting suction part (19) is attached to the lower end of the suction tube (3) and **in that** the level of the non-conducting suction part (19) is determined in such a manner that that a minimally predetermined residual milk volume can still be sucked off when the milk level drops below the threshold value.

4. The beverage preparation machine (11) according to patent claim 2 or 3, **characterized in that** in the case of a milk container (1), which is arranged externally relative to the beverage preparation machine (11), an external evaluation electronic system (16), which is attached to the milk container (1), is available.

## Revendications

1. Procédé pour le dépôt de portions de lait dans des machines de préparation de boissons (11), avec un dispositif de surveillance du niveau de remplissage de lait pour un conteneur à lait (1), dans lequel, conformément au procédé
- un prélèvement d'une portion de lait à partir du conteneur à lait (1), contrôlé par une électronique de commande d'appareil (9) est exécuté entièrement et avec une quantité de lait suffisante, même si le dispositif de surveillance du niveau de lait signale une baisse du niveau de lait en-dessous d'une valeur seuil pendant le prélèvement de la portion de lait,
- une indication indiquant que le conteneur à lait (1) est vide est fournie à l'utilisateur de la machine de préparation de boissons sur un écran (10) lors d'une baisse du niveau de lait en-dessous de la valeur seuil, et
- d'autres prélèvements de portions de lait sont verrouillés dans la machine de préparation de boisson, jusqu'à ce que le conteneur à lait (1) soit de nouveau suffisamment rempli ou du moins jusqu'à ce que le dispositif de surveillance du niveau de lait libère à nouveau cette fonction.

2. Machine de préparation de boissons (11) avec un conteneur à lait (1) et avec un dispositif de surveillance du niveau de lait, pour l'exécution du procédé selon la revendication 1, dans laquelle la machine de préparation de boissons (11) comporte une électronique de commande d'appareil (9), un écran (10) et un émulsionneur de lait (12), et dans laquelle un conduit d'aspiration (3) du conteneur à lait (1) est relié à l'émulsionneur de lait (12) par le biais d'un conduit ou d'un tube (7), et dans laquelle le conduit d'aspiration (3) plongé dans le conteneur à lait (1) comporte un orifice d'aspiration (17), et dans laquelle sont également prévus une tige de mesure (4) également plongée dans le conteneur à lait (1), pour l'établissement de la valeur seuil, ainsi qu'un capteur de valeur seuil travaillant de façon capacitive ou résistive, **caractérisée en ce que** l'orifice d'aspiration (17) à l'extrémité inférieure du conduit d'aspiration (3) est disposé plus près du fond du conteneur à lait (1) qu'une extrémité inférieure de la tige de mesure (4), et **en ce qu'**un espacement vertical entre l'orifice d'aspiration (17) sur le conduit d'aspiration (3) et l'extrémité inférieure de la tige de mesure (4) est ajusté de telle manière, que lors d'une baisse du niveau de lait en-dessous de la valeur seuil, un volume de lait résiduel prédéfini minimal peut encore être aspiré.

3. Machine de préparation de boissons (11) avec un conteneur à lait (1) et avec un dispositif de surveillance du niveau de lait, pour l'exécution du procédé selon la revendication 1, dans laquelle la machine de préparation de boissons (11) comporte une électronique de commande d'appareil (9), un écran (10) et un émulsionneur de lait (12), et dans lequel un conduit d'aspiration (3) du conteneur à lait (1) est relié à l'émulsionneur de lait (12) par le biais d'un conduit ou d'un tube (7), et dans laquelle le conduit d'aspiration (3) plongé dans le conteneur à lait (1) comporte un orifice d'aspiration et sert dans le même temps à comme tige de mesure plongée dans le conteneur à lait (1), pour l'établissement de la valeur seuil, et dans laquelle est également prévu un capteur de valeur seuil capacitif ou résistif, **caractérisée en ce que** le conduit d'aspiration (3) et le conteneur à lait (1) sont électriquement conducteurs et une pièce d'aspiration (19) non électriquement conductrice est placée sur l'extrémité inférieure du conduit d'aspiration (3), et la hauteur de la pièce d'aspiration (19) non conductrice est dimensionnée de telle manière, que lors d'une baisse du niveau de lait en-dessous de la valeur seuil, un volume de lait résiduel prédéfini minimal peut encore être aspiré.

4. Machine de préparation de boissons (11) selon l'une des revendications 2 ou 3, **caractérisé en ce qu'**avec un conteneur à lait (1) disposé à l'extérieur de la machine de préparation de boissons (11), une électronique d'évaluation externe (16) est montée sur le conteneur à lait (1).
